# EUROPÄISCHE PATENTSCHRIFT

(11) **EP 2 917 056 B1**
(45) Veröffentlichungstag und Bekanntmachung des Hinweises auf die Patenterteilung: **03.07.2019**
(21) Anmeldenummer: 13786165.4
(22) Anmeldetag: 29.10.2013
(51) Int. Cl.: B60J 7/00, B60J 7/043

(54) **FAHRZEUGDACH**
VEHICLE ROOF
TOIT DE VÉHICULE

(30) Priorität: 07.11.2012 DE 102012021850
(43) Veröffentlichungstag der Anmeldung: 16.09.2015
(73) Patentinhaber: Audi AG, 85045 Ingolstadt (DE)
(72) Erfinder: RITTHALER, Kurt, 85113 Böhmfeld (DE)
(86) Internationale Anmeldenummer: PCT/EP2013/003245
(87) Internationale Veröffentlichungsnummer: WO 2014/072032

(56) Entgegenhaltungen:
- EP-A1- 0 442 773
- DE-B3-102008 015 669
- DE-B3-102011 119 991
- DE-C1- 19 946 926

## Beschreibung

Die Erfindung betrifft ein Fahrzeugdach gemäß dem Oberbegriff des Patentanspruchs 1.

Die DE 10 2008 015 669 B3 zeigt ein Fahrzeugdach mit einer Dachöffnung, welche von einem Dachelement verschließbar ist, und einer Seitenaußenblende, welche in einer aufgestellten Offenstellung des Dachelements einen seitlichen Spalt zwischen dem Dachelement und einem Seitenwandrahmen abdeckt. Die Seitenaußenblende ist in einem Blendenschacht aufgenommen und schwenkt vertikal nach oben zum Dachelement nach Art einer Fächerblende, wobei eine Drehachse quer zur Fahrzeuglängsachse verläuft. Neben erhöhtem Bauaufwand sind größere Bauhöhen bzw. ein relativ tiefer Blendenschacht für diese fächerartigen Blenden notwendig.

Aus der DE 199 46 926 C5 ist eine Innenverblendung in Form einer Seiteninnenblende für ein Fahrzeugdach bekannt, die neben Sicherheits- und Schutzfunktionen gegen Verschmutzung insbesondere einen Sichtschutz für die Fahrzeuginsassen bereitstellen soll. In Schließstellung liegt die Seiteninnenblende nicht am beweglichen Dachelement selbst an, sondern an einem Führungselement für das Dachelement. Bei vollständiger Überführung in Offenstellung, in der das Dachelement komplett unterhalb eines Heckteils liegt, wird die Seiteninnenblende nicht länger vom Dachelement beaufschlagt und es wirkt keine auslenkende Kraft auf die Seiteninnenblende. Nur während der Überführungsbewegung liegt ein oberer freier Abschnitt der Seiteninnenblende an einer Unterseite des Dachelements an, so dass die Seitenmechanik zum Innenraum abgedeckt und ein Sichtschutz gegeben ist. Die Seiteninnenblende ist schwenkbeweglich in Fahrzeuglängsrichtung klappbar gestaltet und dient als Eingriffsschutz und Sichtschutz und hat mit einer für eine Außenabdichtung eines nach außen ausstellbaren Dachelements, einer sogenannten Aeroblende vorgesehen für Aeroakustikfunktionen an einer Außenseite des Dachelements, technisch kaum Bezug.

Aus der EP 0 442 773 A1 ist eine Fahrzeugdach mit einem beweglichen Dachelement und einer Seiteninnenblende zur Abdeckung einer Seitenmechanik bekannt, welche zur Führung des beweglichen Dachelements zwischen einer Öffnungsstellung und einer Schließstellung verwendet wird.

Aus der DE 10 2011 119 991 B3 ist ein gattungsgemäßes Fahrzeugdach mit einer Dachöffnung, welche von einem aufstellbaren Dachelement verschließbar ist, und einer Seitenaußenblende mit einer dachseitig anbringbaren Schwenklagerung bekannt, welche in einer aufgestellten Offenstellung des Dachelements einen seitlichen Spalt zwischen dem Dachelement und einem Seitenwandrahmen abdeckt. Die Schwenklagerung erstreckt sich entlang der Seitenaußenblende und weist eine gekrümmt oder gewölbte Schwenkachse in Fahrzeuglängsrichtung auf. Die Seitenblende ist in eine im Wesentlichen vertikale Abdeckstellung vorgespannt und gegen einen Anschlag anlegbar.

Die Aufgabe der Erfindung ist es, ein Fahrzeugdach mit einer Seitenaußenblende bereitzustellen, welche einen einfachen und kompakten Aufbau aufweist, wobei vorteilhafterweise nur eine sehr geringe Bauhöhe für die Seitenaußenblende erforderlich ist.

Erfindungsgemäß wird die Aufgabe durch Bereitstellung eines Fahrzeugdachs mit den Merkmalen des Patentanspruchs 1 gelöst. Vorteilhafte Ausführungsformen und Weiterbildungen der Erfindung sind in den abhängigen Ansprüchen angegeben.

Erfindungsgemäße Ausführungsformen des Fahrzeugdaches weisen durch die Seitenaußenblende in vorteilhafter Weise im Fahrbetrieb eine geringe Geräuschentwicklung auf. Erfindungsgemäß ist die Seitenaußenblende bei aufgestelltem Dachelement gegenüber der Horizontalen in einem vorgegebenen Winkel im Bereich von 50 bis 70 Grad, vorzugsweise mit einem Winkel von ca. 60 Grad geneigt ausgestellt, was zu einer besonders geringen Geräuschentwicklung führt. Des Weiteren ist ein Anschlag vorgesehen, um den Neigungswinkel der Seitenaußenblende auf einen vorgegebenen maximalen Öffnungswinkel von ca. 70 Grad zu begrenzen. Dadurch kann in vorteilhafter Weise verhindert werden, dass die klappbare Seitenaußenblende beim Schließen des Dachelements die Bewegung behindert.

Die Seitenaußenblende ist dauerhaft mittels Federkraft zum Dachelement hin gedrückt, um auch beim Anstellen des Dachelements eine gute Aeroakustik aufrecht zu erhalten.

In weiterer vorteilhafter Ausgestaltung des Fahrzeugdachs liegt die Seitenaußenblende an einem als Gleitfläche ausgeführten Kontaktbereich am Dachelement an. Der als Gleitfläche ausgeführte Kontaktbereich kann vorzugsweise aus einer Kunststoffkomponente des Dachelemente gebildet werden. Da das Dachelement in der Regel einen Glasdeckel aufweist, welcher mit einem PUR-Kunststoff umspritzt ist, bildet der PUR-Kunststoff an der Unterseite des Dachelements den als Gleitfläche ausgeführten Kontaktbereich aus. Bei einem nicht mit PUR-Kunststoff umspritzten Dachelement kann an der Unterseite des Dachelements zur Ausbildung des als Gleitfläche ausgeführten Kontaktbereichs ein entsprechendes Kunststoffteil angebracht werden.

In weiterer vorteilhafter Ausgestaltung des Fahrzeugdachs ist eine Lagerung der Seitenaußenblende an mindestens zwei, in Fahrzeuglängsrichtung beabstandeten Lagerstellen am Seitenwandrahmen oder an einem Aufnahmerahmen vorgesehen.

In weiterer vorteilhafter Ausgestaltung des Fahrzeugdachs liegt die Seitenaußenblende in der aufgestellten Offenstellung des Dachelements mit einem vorgegebenen Abstand von einem Außenrand des Dachelements an einer Unterseite des Dachelements an, was ebenfalls zu einer besonders geringen Geräuschentwicklung führt. Dabei hat sich ein vorgegebener Abstand im Bereich von 20 bis 40 mm, vorzugsweise von ca. 25 mm, als vorteilhaft herausgestellt. Der Abstand wird im hinteren Bereich bzw. an einer Hinterkante des Dachelements gemessen. Da die Seitenaußenblende keilförmig ausgeführt ist, ist der Überhang im vorderen Bereich des Dachelements geringer.

In weiterer vorteilhafter Ausgestaltung des Fahrzeugdachs nimmt das Dachelement eine an einer Unterseite des Dachelements befestigte Dichtung auf, an welcher in der aufgestellten Offenstellung des Dachelements die Seitenaußenblende seitlich anliegt. Durch diese Abdichtung lässt sich die Geräuschentwicklung weiter verbessern. In einfacher Art und Weise kann die Dichtung als elastisches Schaumstoffelement ausgebildet sein.

In weiterer vorteilhafter Ausgestaltung des Fahrzeugdachs ist zwischen dem Seitenwandrahmen und der Seitenaußenblende eine Rahmendichtung vorgesehen, die eine gute Fugenabdichtung des Dachelements am Seitenrahmen im geschlossenen Zustand bildet und zusätzlich die Funktion einer Aeroakustikabdichtung für die aufgeklappte Seitenaußenblende zum Seitenwandrahmen übernimmt. Daher kann die Rahmendichtung in der aufgestellten Offenstellung des Dachelements gegen die Seitenaußenblende und den Seitenwandrahmen sowie in der Geschlossenstellung des Dachelements gegen den Außenrand des Dachelements und den Seitenwandrahmen abdichten. Die Rahmendichtung kann beispielsweise am Aufnahmerahmen oder am Seitenwandrahmen angeordnet werden.

In weiterer vorteilhafter Ausgestaltung des Fahrzeugdachs kann die Seitenaußenblende als einteiliges oder mehrteiliges Blechbauteil ausgeführt werden. Alternativ kann die Seitenaußenblende als einteiliges oder mehrteiliges Kunststoffbauteil ausgeführt werden. Die Ausführung als Blechbauteil ermöglicht eine besonders kompakte Bauweise, da eine geringere Wandstärke als bei einer Ausführung als Kunststoffbauteil gewählt werden kann.

Vorteilhafte Ausführungsformen der Erfindung sind in der Zeichnung dargestellt und werden nachfolgend beschrieben.

Dabei zeigen:
- Fig. 1: eine perspektivische Darstellung eines Ausführungsbeispiels eines Fahrzeugdachs mit einem Dachelement und einer Seitenaußenblende,
- Fig. 2: eine Schnittdarstellung eines Ausschnitts einer Seite des Fahrzeugdachs aus Fig. 1 quer zur Fahrzeuglängsrichtung in einer aufgestellten Offenstellung des Dachelements, und
- Fig. 3: eine Schnittdarstellung eines Ausschnitts einer Seite des Fahrzeugdachs aus Fig. 1 quer zur Fahrzeuglängsrichtung in einer geschlossenen Stellung des Dachelements.

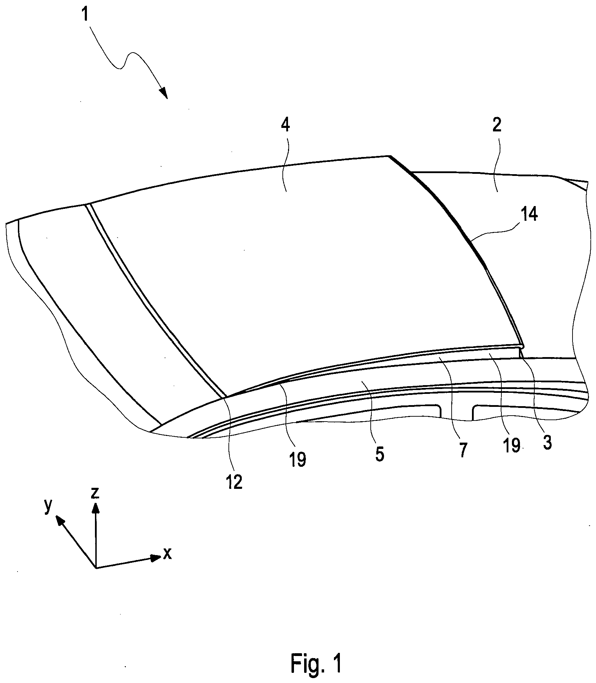

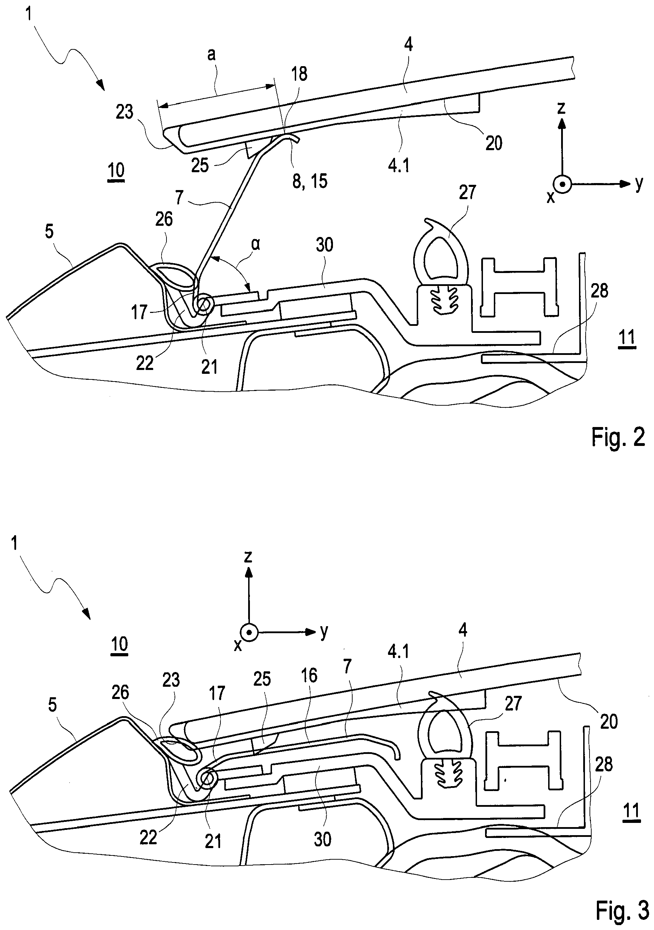

Wie aus Fig. 1 ersichtlich ist, ist das dargestellte Ausführungsbeispiel eines Fahrzeugdachs 1 eines Kraftfahrzeugs mit einem nicht näher dargestellten Dachöffnungssystem versehen ist und umfasst beispielsweise einen hinteren festen Dachbereich 2, an welchem sich nach vorne, das heißt in Richtung Fahrzeugbug bzw. entgegen der Fahrzeuglängsachse x eine Dachöffnung 3 anschließt, welche mittels eines Dachelements 4 wahlweise verschlossen oder zumindest teilweise freigegeben werden kann. Dargestellt ist das Dachelement 4 in einem aufgestellten Zustand, einer so genannten Belüftungsstellung, in welcher eine hintere Seite 14 des Dachelements 4 nach oben ausgestellt ist, wonach zum vollständigen Öffnen ein Anheben des Dachelements 4 und anschließendes Verfahren in Richtung Fahrzeugheck bzw. in Richtung der Fahrzeuglängsachse x erfolgt. Aus optischen Gründen ist ein sogenanntes Rail-to-Rail-Dachkonzept verwirklicht, bei welchem das Dachelement 4 von Seitenwandrahmen 5 zu Seitenwandrahmen 5 bzw. von Dachholm zu Dachholm ohne seitliche Blende am Fahrzeugdach 1 verläuft. Beidseitig des Dachelements 4 ist in Fahrzeugquerrichtung y jeweils eine Seitenaußenblende 7 vorgesehen, welche vom Seitenwandrahmen 5 weg gekippt zum Dachelement 4 hin bzw. geneigt zur Fahrzeughochachse z verlaufen und einen ansonsten vorliegenden seitlichen Spalt zwischen Außenbereich 10 und einem Fahrzeuginnenraum 11 des Fahrzeugs hin abdecken. Erfindungsgemäß sind die beiden Seitenaußenblenden 7 schwenkbeweglich in Fahrzeuglängsrichtung X gelagert. Dies erfolgt an mindestens zwei, in Fig. 1 angedeuteten Lagerstellen 19 am Rahmen. Von einem Drehpunkt 12 zum Aufstellen des Dachelements 4 am Fahrzeugbug betrachtet, erstreckt sich die Seitenaußenblende 7 in Längsrichtung bis zur hinteren Seite 14 des Dachelements 4 und weist eine Keilform mit zum Fahrzeuginnenraum 11 hin leicht abgebogenen, in Fig. 2 und 3 im Schnitt gezeigten, rinnenförmigen bzw. klammerförmigen Schenkeln 8 auf.

In Fig. 2 ist eine Schnittdarstellung in Fahrzeugquerrichtung y des Fahrzeugdachs 1 in einer aufgestellten Offenstellung des Dachelements 4 nach Fig. 1 gezeigt. In Fig. 2 ist nur ein Ausschnitt einer Seite des Fahrzeugdachs 1 näher dargestellt. Die andere Seite kann entsprechend durch Spiegelung ergänzt werden. Die Seitenaußenblende 7 ist vorzugsweise als Blechteil und/oder Kunststoffteil ausgeführt und liegt mit einem freien, leicht abgebogenen Endabschnitt 15 bzw. Schenkel 8 an einer Unterseite 20 des Dachelements 4 an. Das Dachelement 4 ist in bekannter Weise als Glasdach ausgeführt, welches mit einer PUR-Umspritzung 4.1 (PUR: Polyurethan) versehen ist. Die PUR-Umspritzung 4.1 dient als Gleitfläche eines Kontaktbereichs 18 zur Seitenaußenblende 7. Bei einem ohne PUR-Umspritzung 4.1 ausgeführtem Dachelement 4 wird zu Ausbildung der Gleitfläche des Kontaktbereichs 18 zur Seitenaußenblende 7 ein entsprechendes Kunststoffelement an der Unterseite 20 des Dachelements 4 beispielsweise durch Kleben angebracht. Ein dem Seitenwandrahmen 5 zugewandter Drehabschnitt 17 der Seitenaußenblende 7 bildet eine Drehachse 21 für die Seitenaußenblende 7, welcher über ein nicht näher dargestelltes Federelement, zum Beispiel einer Blattfeder oder nach dem Prinzip einer Torsionsfeder, vorgespannt ist. Damit kann eine Federspannung der Seitenaußenblende 7 in Richtung der Unterseite 20 des Dachelements 4 aufrechterhalten werden, so dass ständig eine Vorspannkraft vom freien Endabschnitt 15 der Seitenaußenblende 7 in Richtung auf das Dachelement 4 wirkt. Im Bereich der Kontaktstelle des freien Endabschnitts 15 der Seitenaußenblende 7 ist eine Dichtung 25 angebracht, welche bei der Hubbewegung des Dachelements 4 die Seitenaußenblende 7 nach außen 10 abdichtet, jedoch beim Schließen des Dachelements 4 sofort den Kontakt verliert, um nicht die Bewegung des Dachelements 4 in Richtung Fahrzeugdach 1 zu behindern. Vorzugsweise ist die Dichtung 25 als elastisches Schaumstoffelement ausgebildet und erstreckt sich in Fahrzeuglängsrichtung x entlang der Seitenaußenblende 7. Die längliche Erstreckung in Fahrzeuglängsrichtung x der Dichtung 25 entspricht dabei im Wesentlichen der länglichen Erstreckung der Seitenaußenblende 7. Das Dachelement 4 ist beidseits in einer Führungsschiene 28 geführt und kann so über den festen Dachbereich 2 nach hinten in Richtung Fahrzeugheck verfahren. Das Dachelement 4 stellt somit ein außen laufendes Schiebedach dar.

In Fig. 3 ist eine weitere Schnittdarstellung in Fahrzeugquerrichtung y des Fahrzeugdachs 1 in einer geschlossenen Stellung des Dachelements 4 aus Fig. 1 gezeigt. In Fig. 3 ist nur ein Ausschnitt einer Seite des Fahrzeugdachs 1 näher dargestellt. Die andere Seite kann entsprechend durch Spiegelung ergänzt werden. In der Geschlossenstellung wird die Seitenaußenblende 7 unter Federspannung über die Dichtung 25 an die Unterseite 20 des Dachelements 4 angedrückt. Die Dichtung 25 wird so am Dachelement 4 in Schließstellung positioniert, dass sie im Übergangsbereich von einem mittleren Abschnitt 16 zu dem Drehabschnitt 17 an der Seitenaußenblende 7 anliegen kann. Die Dichtung 25 ist im Wesentlichen aus Geräuschminderungsgründen vorgesehen. Je nach Strömungsverhältnissen und vorgesehenem Anstellwinkel kann auch auf diese Dichtung 25 verzichtet werden. Möglich ist auch, die Schaumdichtung 25 am Dachelement 4 durch eine Dichtlippe an der Seitenaußenblende 7 zu ersetzen. Diese Dichtung kann dann beispielsweise aus terpolymerem Elastomer, wie EPDM (Ethylen-Propylen-Dien-Kautschuk) hergestellt werden.

Akustikversuche haben gezeigt, dass es zur Geräuschminderung vorteilhaft ist, die Seitenaußenblende 7 unter einem vorgegebenen Anstellwinkel a, bestimmt von der Horizontalen zur Seitenaußenblende 7, im Bereich von 50 bis 70 Grad auszuklappen. Als besonders vorteilhaft hat sich ein Winkel α von ca. 60 Grad erwiesen. Dabei ist ein sicheres Wegdrehen der Seitenaußenblende 7 beim Schließen des Dachelements 4 gegeben. Des Weiteren ist ein nicht sichtbarer Anschlag vorhanden, welcher den Neigungswinkel α der Seitenaußenblende 7 auf einen vorgegebenen maximalen Öffnungswinkel von ca. 70 Grad begrenzt. Dadurch kann in vorteilhafter Weise verhindert werden, dass die Seitenaußenblende 7 beim Schließen des Dachelements 4 die entsprechende Schließbewegung blockiert bzw. behindert. Ein Anlenkpunkt der Seitenaußenblende 7 im Kontaktbereich 4.1 an der Unterseite 20 des Dachelements 4 ist im geöffneten Zustand des Dachelements 4 dabei so nach innen versetzt positioniert, dass sich ein Überhang mit einem vorgegebenen Abstand a von einem Außenrand 23 des Dachelements 4 im Bereich von 20 bis 40 mm ergibt. Als vorteilhaft hat sich ein Abstand a bzw ein Überhang von 25 mm herausgestellt, wobei der Abstand a im hinteren Bereich 14 bzw an einer Hinterkante des Dachelements 4 gemessen wird. Im Windkanal hat es sich dabei als vorteilhaft für die Geräuschentwicklung gezeigt, die klappbare Seitenaußenblende 7 schräg zum Dachelement 4 unter dem Anstellwinkel α = 60 Grad zu stellen und zugleich den Überhang a mit bis zu 25 mm zu gestalten. Diese Lösung bietet Vorteile gegenüber einem vergleichbaren Faltenbalg an der Außenkante bzw. am Außenrand 23 des Dachelements 4.

Die Lagerstelle für die Seitenaußenblende 7 ist rahmenfest und dem Seitenwandrahmen 5 zugeordnet, wofür beispielsweise ein rinnenförmiges Element 22 zwischen Seitenwandrahmen 5 und einem Aufnahmerahmen 30 für ein Dichtprofil 27 vorgesehen ist. Der Fugenbereich zwischen Seitenwandrahmen 5 und Seitenaußenblende 7 ist mit einer weiteren, rahmenfesten Dichtung, im Folgenden als Rahmendichtung 26 bezeichnet, abgedichtet, wobei die Rahmendichtung 26 die Dachöffnung 3 seitlich umgibt. Im dargestellten Ausführungsbeispiel ist die Rahmendichtung 26 über das rinnenförmige Element 22 am Aufnahmerahmen 30 angebracht. Zusätzlich oder alternativ kann die Rahmendichtung 26 an der Seitenaußenblende 7 oder am Seitenwandrahmen 5 befestigt werden. Das rinnenförmige Element 22 entspricht im dargestellten Ausführungsbeispiel einem Hartbereich der Rahmendichtung 26. In geschlossener Stellung liegt das Dachelement 4 mit seiner Unterseite 20 an der Rahmendichtung 26 an. Die am Seitenwandrahmen 5 anliegende Rahmendichtung 26 übernimmt damit die Funktion einer Fugendichtung zwischen Dachelement 4 und Seitenwandrahmen 5 für das geschlossene Dachelement 4. Außerdem wird durch die Rahmendichtung 26 eine Akustikdichtung für die klappbare Seitenaußenblende 7 zum Seitenwandrahmen 5 bereitgestellt, welche in der aufgestellten Offenstellung des Dachelements 4 mit ihrem Drehabschnitt 17 an der Rahmendichtung 26 anliegt. Die Rahmendichtung 26 ist an den nicht näher dargestellten, zumindest zwei, in Fig. 1 angedeuteten Lagerstellen 19 für die Seitenaußenblende 7 lokal ausgeschnitten. In der Geschlossenstellung des Dachelements 4 legt sich die Schaumstoffdichtung 25 an die Seitenaußenblende 7 an. Das Dachelement 4 liegt an der Rahmendichtung 26 sowie dem umlaufenden, neben der Führungsschiene 28 vorgesehenen Dichtprofil 27 an. Da die Seitenaußenblende 7 aus Metall besteht, damit starr ist, und im aufgeschwenkten Zustand nicht ganz mit der Krümmung des Seitenwandrahmens 5 zusammenfällt, ist die Rahmendichtung 26 erforderlich, um so die Differenzen ausgleichen zu können. Um die Seitenaußenblende 7 besser an die Krümmung des Seitenwandrahmens 5 anpassen zu können, kann die Seitenaußenblende 7 bei einem nicht dargestellten Ausführungsbeispiel mehrteilig ausgeführt werden.

Die klappbare, federbelastete, schwenkbeweglich in Fahrzeuglängsrichtung x gelagerte Seitenaußenblende 7 ist im dargestellten Ausführungsbeispiel am Aufnahmerahmen 30 angebracht und dreht über zumindest zwei Drehstellen bzw. Lagerstellen 19 beim Aufstellen des Dachelements 4 von innen 11 nach außen 10 heraus. Alternativ können die Lagerstellen 19 am Seitenwandrahmen 5 angeordnet werden. Nach erfolgtem Aufstellen des Dachelements 4 kann ein Verfahren des Dachelements 4 nach hinten in Richtung Fahrzeugheck vorgesehen sein, wobei die Seitenaußenblende 7 ortsfest stehenbleibt und sich das Dachelement 4 von der Seitenaußenblende 7 teilweise entfernt bzw. abhebt. Durch die am Aufnahmerahmen 30 festliegende Seitenaußenblende 7 ist ein sehr kompakter Aufbau möglich.

### BEZUGSZEICHENLISTE

- 1: Fahrzeugdach
- 2: hinterer Dachbereich
- 3: Dachöffnung
- 4: Dachelement
- 4.1: PUR-Umspritzung
- 5: Seitenwandrahmen
- 7: Seitenaußenblende
- 8: Schenkel
- 10: Außenbereich
- 11: Fahrzeuginnenraum
- 12: Drehpunkt
- 14: hintere Seite des Dachelements
- 15: Endabschnitt
- 16: mittlerer Abschnitt
- 17: Drehabschnitt
- 18: Kontaktbereich
- 19: Lagerstellen
- 20: Unterseite
- 21: Drehachse
- 22: Element
- 23: Außenrand
- 25: Dichtung
- 26: Rahmendichtung
- 27: Dichtprofil
- 28: Führungsschiene
- 30: Aufnahmerahmen

## Patentansprüche

1. Fahrzeugdach mit einer Dachöffnung (3), welche von einem aufstellbaren Dachelement (4) verschließbar ist, und einer Seitenaußenblende (7), welche in einer aufgestellten Offenstellung des Dachelements (4) einen seitlichen Spalt zwischen dem Dachelement (4) und einem Seitenwandrahmen (5) abdeckt, wobei die Seitenaußenblende (7) schwenkbeweglich in Fahrzeuglängsrichtung (x) gelagert und dauerhaft mittels Federkraft zum Dachelement (4) hin gedrückt ist, wobei bei aufgestelltem Dachelement (4) die Seitenaußenblende (7) gegenüber der Horizontalen in einem vorgegebenen Winkel geneigt ausgestellt ist, **dadurch gekennzeichnet, dass** der vorgegebene Winkel (α) der Seitenaußenblende (7) gegenüber der Horizontalen im Bereich von 50 bis 70 Grad liegt, wobei ein Anschlag den Neigungswinkel der Seitenaußenblende (7) auf einen vorgegebenen maximalen Öffnungswinkel von ca. 70 Grad begrenzt.

2. Fahrzeugdach nach Anspruch 1, **dadurch gekennzeichnet, dass** die Seitenaußenblende (7) an einem als Gleitfläche ausgeführten Kontaktbereich (18) am Dachelement (4) anliegt.

3. Fahrzeugdach nach Anspruch 2, **dadurch gekennzeichnet, dass** der als Gleitfläche ausgeführte Kontaktbereich (18) auf einer Kunststoffkomponente (4.1) des Dachelements (4) ausgebildet ist.

4. Fahrzeugdach nach einem der vorherigen Ansprüche 1 bis 3, **dadurch gekennzeichnet, dass** die Lagerung der Seitenaußenblende (7) an mindestens zwei, in Fahrzeuglängsrichtung (x) beabstandeten Lagerstellen (19) am Seitenwandrahmen (5) oder an einem Aufnahmerahmen (30) erfolgt.

5. Fahrzeugdach nach einem der vorherigen Ansprüche 1 bis 4, **dadurch gekennzeichnet, dass** in der aufgestellten Offenstellung des Dachelements (4) die Seitenaußenblende (7) mit einem vorgegebenen Abstand (a) von einem Außenrand (23) des Dachelements (4) an einer Unterseite (20) des Dachelements (4) anliegt.

6. Fahrzeugdach nach Anspruch 5, **dadurch gekennzeichnet, dass** der Abstand (a) im Bereich von 20 bis 40 mm liegt, vorzugsweise ca. 25 mm beträgt.

7. Fahrzeugdach nach einem der vorherigen Ansprüche 1 bis 6, **dadurch gekennzeichnet, dass** das Dachelement (4) eine an einer Unterseite (20) des Dachelements (4) befestigte Dichtung (25) aufnimmt, an welcher in der aufgestellten Offenstellung des Dachelements (4) die Seitenaußenblende (7) seitlich anliegt.

8. Fahrzeugdach nach Anspruch 7, **dadurch gekennzeichnet, dass** die Dichtung (25) als elastisches Schaumstoffelement ausgebildet ist.

9. Fahrzeugdach nach einem der vorherigen Ansprüche 1 bis 8, **dadurch gekennzeichnet, dass** zwischen Seitenwandrahmen (5) und Seitenaußenblende (7) eine Rahmendichtung (26) vorgesehen ist.

10. Fahrzeugdach nach Anspruch 9, **dadurch gekennzeichnet, dass** die Rahmendichtung (26) in der aufgestellten Offenstellung des Dachelements (4) gegen die Seitenaußenblende (7) und den Seitenwandrahmen (5) abdichtet und in Geschlossenstellung des Dachelements (4) gegen den Außenrand (23) des Dachelements (4) und den Seitenwandrahmen (5) abdichtet.

11. Fahrzeugdach nach Anspruch 9 oder 10, **dadurch gekennzeichnet, dass** die Rahmendichtung (26) am Aufnahmerahmen (30) oder am Seitenwandrahmen (5) angeordnet ist.

12. Fahrzeugdach nach einem der vorherigen Ansprüche 1 bis 11, **dadurch gekennzeichnet, dass** die Seitenaußenblende (7) als einteiliges oder mehrteiliges Blechbauteil und/oder Kunststoffbauteil ausgeführt ist.

## Claims

1. Vehicle roof having a roof opening (3) which is able to be closed by an erectable roof element (4), and a side outer panel (7) which covers a side gap between the roof element (4) and a side wall frame (5) in an erected open position of the roof element (4), wherein the side outer panel (7) is mounted to be pivotable in the vehicle longitudinal direction (x) and is pressed permanently by means of spring force towards the roof element (4), wherein the side outer panel (7) is erected to be inclined at a predetermined angle with respect to the horizontal in the case of an erected roof element (4), **characterised in that** the predetermined angle (α) of the side outer panel (7) ranges from 50 to 70 degrees with respect to the horizontal, wherein a stop limits the inclination angle of the side outer panel (7) to a predetermined maximum opening angle of approx. 70 degrees.

2. Vehicle roof according to claim 1, **characterised in that** the side outer panel (7) abuts onto the roof element (4) at a contact region (18) implemented as a sliding surface.

3. Vehicle roof according to claim 2, **characterised in that** the contact region (18) implemented as a sliding surface is formed on a plastic component (4.1) of the roof element (4).

4. Vehicle roof according to any one of the preceding claims 1 to 3, **characterised in that** the mounting of the side outer panel (7) occurs on the side wall frame (5) or on a receiving frame (30) at at least two mounting points (19) spaced apart in the vehicle longitudinal direction (x).

5. Vehicle roof according to any one of the preceding claims 1 to 4, **characterised in that** in the erected open position of the roof element (4), the side outer panel (7) abuts onto an underside (20) of the roof element (4) at a predetermined distance (a) from an outer edge (23) of the roof element (4).

6. Vehicle roof according to claim 5, **characterised in that** the distance (a) ranges from 20 to 40 mm, preferably amounts to approx. 25 mm.

7. Vehicle roof according to any one of the preceding claims 1 to 6, **characterised in that** the roof element (4) receives a seal (25) fastened to an underside (20) of the roof element (4), onto which the side outer panel (7) abuts in the erected open position of the roof element (4).

8. Vehicle roof according to claim 7, **characterised in that** the seal (25) is formed as an elastic foam material element.

9. Vehicle roof according to any one of the preceding claims 1 to 8, **characterised in that** a frame seal (26) is provided between the side wall frame (5) and the side outer panel (7).

10. Vehicle roof according to claim 9, **characterised in that** the frame seal (26) seals against the side outer panel (7) and the side wall frame (5) in the erected open position of the roof element (4) and seals against the outer edge (23) of the roof element (4) and the side wall frame (5) in the closed position of the roof element (4).

11. Vehicle roof according to claim 9 or 10, **characterised in that** the frame seal (26) is arranged on the receiving frame (30) or on the side wall frame (5).

12. Vehicle roof according to any one of the preceding claims 1 to 11, **characterised in that** the side outer panel (7) is implemented as a single-piece or multi-piece sheet metal part and/or plastic component.

## Revendications

1. Toit de véhicule avec une ouverture de toit (3), laquelle peut être fermée par un élément de toit (4) pouvant être déployé, et un système obturateur extérieur latéral (7), lequel recouvre, dans une position ouverte déployée de l'élément de toit (4), une fente latérale entre l'élément de toit (4) et un cadre de paroi latérale (5), dans lequel le système obturateur latéral (7) est monté de manière mobile par pivotement dans le sens longitudinal de véhicule (x) et poussé durablement au moyen d'une force élastique vers l'élément de toit (4), dans lequel lorsque l'élément de toit (4) est déployé, le système obturateur latéral (7) est placé de manière inclinée selon un angle prédéfini par rapport à l'horizontale, **caractérisé en ce que** l'angle (a) prédéfini du système obturateur latéral (7) se situe par rapport à l'horizontale dans la plage allant de 50 à 70 degrés, dans lequel une butée délimite l'angle d'inclinaison du système obturateur latéral (7) sur un angle d'ouverture maximal prédéfini d'environ 70 degrés.

2. Toit de véhicule selon la revendication 1, **caractérisé en ce que** le système obturateur latéral (7) repose au niveau d'une zone de contact (18) réalisée sous la forme d'une surface coulissante au niveau de l'élément de toit (4).

3. Toit de véhicule selon la revendication 2, **caractérisé en ce que** la zone de contact (18) réalisé sous la forme d'une surface coulissante est réalisée sur une composante en matière plastique (4.1) de l'élément de toit (4).

4. Toit de véhicule selon l'une quelconque des revendications 1 à 3 précédentes, **caractérisé en ce que** le montage du système obturateur latéral (7) est effectué au niveau d'au moins deux emplacements de montage (19) espacés dans le sens longitudinal de véhicule (x) au niveau du cadre de paroi latérale (5) ou au niveau d'un cadre de logement (30).

5. Toit de véhicule selon l'une quelconque des revendications 1 à 4 précédentes, **caractérisé en ce que** dans la position ouverte déployée de l'élément de toit (4), le système obturateur latéral (7) repose à une distance (a) prédéfinie depuis un bord extérieur (23) de l'élément de toit (4) au niveau d'un côté inférieur (20) de l'élément de toit (4).

6. Toit de véhicule selon la revendication 5, **caractérisé en ce que** la distance (a) se situe dans la plage allant de 20 à 40 mm, de préférence d'environ 25 mm.

7. Toit de véhicule selon l'une quelconque des revendications 1 à 6 précédentes, **caractérisé en ce que** l'élément de toit (4) loge un joint d'étanchéité (25) fixé à un côté inférieur (20) de l'élément de toit (4), au niveau duquel le système obturateur latéral (7) repose latéralement dans la position ouverte déployée de l'élément de toit (4).

8. Toit de véhicule selon la revendication 7, **caractérisé en ce que** le joint d'étanchéité (25) est réalisé sous la forme d'un élément en mousse élastique.

9. Toit de véhicule selon l'une quelconque des revendications 1 à 8 précédentes, **caractérisé en ce qu'**un joint d'étanchéité de cadre (26) est prévu entre le cadre de paroi latérale (5) et le système obturateur extérieur latéral (7).

10. Toit de véhicule selon la revendication 9, **caractérisé en ce que** le joint d'étanchéité de cadre (26) étanchéifie dans la position ouverte déployée de l'élément de toit (4) par rapport au système obturateur latéral (7) et au cadre de paroi latérale (5) et étanchéifie, dans la position fermée de l'élément de toit (4) par rapport au bord extérieur (23) de l'élément de toit (4) et par rapport au cadre de paroi latérale (5).

11. Toit de véhicule selon la revendication 9 ou 10,
**caractérisé en ce que** le joint d'étanchéité de cadre (26) est disposé au niveau du cadre de logement (30) ou au niveau du cadre de paroi latérale (5).

12. Toit de véhicule selon l'une quelconque des revendications 1 à 11 précédentes, **caractérisé en ce que** le système obturateur latéral (7) est réalisé sous la forme d'un composant en tôle et/ou d'un composant en matière plastique en une pièce ou en plusieurs pièces.
